# EUROPÄISCHE PATENTSCHRIFT

(11) **EP 2 901 903 B1**
(45) Veröffentlichungstag und Bekanntmachung des Hinweises auf die Patenterteilung: **01.05.2019**
(21) Anmeldenummer: 15152418.8
(22) Anmeldetag: 26.01.2015
(51) Int. Cl.: A47J 43/07, B01F 15/00, A47J 43/046, A47J 36/32

(54) **VERFAHREN ZUM BETRIEB EINER KÜCHENMASCHINE UND KÜCHENMASCHINE**
METHOD FOR OPERATING A KITCHEN APPLIANCE AND KITCHEN APPLIANCE
PROCÉDÉ DE FONCTIONNEMENT D'UN ROBOT MÉNAGER ET ROBOT MÉNAGER

(30) Priorität: 29.01.2014 DE 102014101079
(43) Veröffentlichungstag der Anmeldung: 05.08.2015
(73) Patentinhaber: Vorwerk & Co. Interholding GmbH, 42275 Wuppertal (DE)
(72) Erfinder: Koetz, Hendrik, 45138 Essen (DE)
(74) Vertreter: Müller, Enno

(56) Entgegenhaltungen:
- EP-A1- 2 878 248
- WO-A1-2011/113204
- WO-A2-2004/065916
- US-A- 5 605 090

## Beschreibung

Die Erfindung betrifft zunächst ein Verfahren zum Betrieb einer Küchenmaschine nach den Merkmalen des Oberbegriffes des Anspruches 1. Die Erfindung betrifft darüber hinaus eine Küchenmaschine nach den Merkmalen des Oberbegriffes des Anspruches 8.

Solche Küchenmaschinen und ein solches Verfahren zum Betreiben von Küchenmaschinen sind bereits bekannt. Beispielweise aus der DE 102007059236 A1. Darüber hinaus ist beispielsweise auf die EP 0757530 B1, betreffend ein besonderes Zubereitungsverfahren in einer solchen Küchenmaschine, hinzuweisen. Weiter sind Verfahren bekannt, mittels welchen in Art einer Rezeptabarbeitung Abarbeitungsvorgänge durchgeführt werden. Hierzu ist beispielsweise auf die DE 102010060650 A1 zu verweisen.

Eine Gesamtheit von Abarbeitungsvorgängen, die auch als Rezept angesprochen werden kann, kann von einem Benutzer bevorzugt unter einer Mehrzahl solcher Gesamtheiten bzw. Rezepte ausgewählt werden. Die Gesamtheiten oder Rezepte können in der Küchenmaschine, beispielsweise in Form von Daten, in einem entsprechenden Datenspeicher gespeichert sein. Sie können auch teilweise oder insgesamt auf einem mit der Küchenmaschine elektrisch leitend verbindbaren gesonderten Datenspeicher, beispielsweise einem USB-Stick, enthalten sein oder der Küchenmaschine durch drahtlose Übertragung aus einem Datenspeicher übermittelt werden. Darüber hinaus können derartige Abarbeitungsvorgänge auch durch unmittelbaren Eingriff in die Steuerung der Küchenmaschine von einem separaten Gerät, insbesondere Datenverarbeitungsgerät, wie beispielsweise einem Computer, durch Leitungsverbindung oder drahtlose Verbindung, übermittelt werden.

Aus der US-A-5,605,090 ist eine Brotbackmaschine bekannt. Hierbei wird zunächst hinsichtlich einer Zugabe die Menge der festen Zutaten als solche erfasst und weiter die Menge des zuzugebenden Wassers andererseits. Die gegebene Anteiligkeit der Zutaten führt zur Auswahl eines bestimmten Programms. Aus der WO-A1-2011/113204 ist es auch lediglich bekannt, Zugabemittel hinsichtlich ihres Gewichtes in einer Küchenmaschine zu erfassen. Eine gleiche Offenbarung enthält auch die WO-A2-2004/065916.

Bei den bekannten Verfahren kann es vorkommen, dass von einem Benutzer eine Menge an Medium eingegeben wird, die nicht der vorausgesetzten Menge entspricht oder nicht der an dieser Stelle eines Abarbeitungsvorganges vorausgesetzten Menge entspricht. Eine solche Handhabung kann sich nachteilig auf den Erfolg der Zubereitung auswirken.

Die als bekannt vorausgesetzten Küchenmaschinen lassen auch die Zugabe einer Menge an Medium zu, die nicht der vorausgesetzten Menge entspricht beziehungsweise nicht der an dieser Stelle eines Abarbeitungsvorganges vorausgesetzten Menge entspricht.

Ausgehend von dem dargelegten Stand der Technik beschäftigt sich die Erfindung mit der Aufgabe, ein Verfahren zum Betrieb einer Küchenmaschine anzugeben, das es ermöglicht auch bei Eingabe von einem Abarbeitungsvorgang nicht entsprechender Menge zu einem günstigen Ergebnis zu kommen. Entsprechend beschäftigt sich die Erfindung auch mit der Aufgabe; eine Küchenmaschine anzugeben, die es ermöglicht, auch bei Eingabe von einem Abarbeitungsvorgang nicht entsprechender Menge zu einem günstigen Ergebnis zu kommen.

Diese Aufgabe ist hinsichtlich des Verfahrens beim Gegenstand des Anspruches 1 gelöst, wobei darauf abgestellt, dass als Reaktion der Küchenmaschine eine Anpassung einer oder mehrerer in einem Rezept vorgesehener, zuzugebender Mengen an Medien vorgenommen wird.

Diese Aufgabe ist auch beim Gegenstand des Anspruches 8 gelöst, wobei darauf abgestellt ist, dass als Reaktion der Küchenmaschine durch die Steuerung der Küchenmaschine eine Anpassung einer oder mehrerer in einem Rezept vorgesehener, zuzugebender Mengen an Medien vornehmbar ist.

Die Erfindung geht grundsätzlich den Weg, die Zugabe einer einem zugeordneten Arbeitsvorgang nicht entsprechenden Menge weiterhin zuzulassen, diese entsprechende Menge aber im Hinblick auf eine mögliche Anpassung von einem oder mehreren weiteren Arbeitsvorgängen zu berücksichtigen. Dies im Hinblick auch auf ein von der Küchenmaschine unterstelltes, gegebenenfalls durch den Benutzer zu quittierendes, oder von dem Benutzer beispielsweise eingebbares geändertes Gesamtergebnis. Das geänderte Gesamtergebnis kann beispielsweise bedeuten, dass eine geänderte Konsistenz (Viskosität) des Zubereitungsgutes erreicht wird und/oder dass eine andere Menge (Anzahl von Portionen) zubereitet wird.

Im Hinblick auf die erforderliche Erfassung des Gewichts der zugegebenen Menge an Medium kann die Küchenmaschine eine integrierte Waage enthalten. Es kann auch mit einer von der Küchenmaschine unabhängigen oder mit der Küchenmaschine in Funkverbindung oder Leitungsverbindung, aber ansonsten nicht mit der Küchenmaschine verbundenen Waage, gearbeitet werden. Gegebenenfalls kann auch von der Küchenmaschine zunächst die Eingabe des Gewichts eines durch den Benutzer dann in der Regel unabhängig von der Küchenmaschine gewogenen Mediums verlangt werden. Hierzu kann die Küchenmaschine ein Bedienfeld, beispielsweise mit einem Display, aufweisen, über welches durch analoge oder digitale Eingabemittel die genannte Menge eingegeben werden kann. Hinsichtlich eines Volumens kann die Eingabe einer hierfür passenden Einheit, wie beispielsweise Liter oder Esslöffel (bezogen auf eine Standardgröße), verlangt werden.

Eine Medienangabe kann in der Regel entfallen beziehungsweise nicht vorgesehen sein, da die Küchenmaschine das an der betreffenden Stelle eines Abarbeitungsvorganges zur Eingabe vorgesehene Medium, wie beispielsweise Mehl, unterstellen kann.

Bevorzugt ist, dass ein hinsichtlich dem zuzugebenden Medium erfasstes Gewicht unmittelbar, ohne einen Benutzereingriff, von der Küchenmaschine verarbeitet wird. Hierzu weist die Küchenmaschine bevorzugt eine Rechnereinheit, beispielsweise mit einem Mikroprozessor, auf, mit welcher entsprechende Berechnungen durchgeführt werden können. Ein durch die Waage erfasstes Gewicht oder ein eingegebenes Gewicht können von dieser Rechnereinheit mit einem für das in dem Abarbeitungsvorgang vorgesehene Medium gespeicherten spezifischen Gewicht verglichen werden. Etwa wenn in dem Arbeitsvorgang ein bestimmtes Volumen angegeben oder vorgegeben ist. Grundsätzlich kann die Küchenmaschine auch die Eingabe eines spezifischen Gewichtes durch den Benutzer an einer solchen Stelle der Verarbeitung verlangen.

Mit Hilfe des spezifischen Gewichtes kann festgestellt werden, ob die zugegebene Menge der in dem Abarbeitungsvorgang vorausgesetzten Menge der in dem Abarbeitungsvorgang vorausgesetzten Menge (beispielsweise 1 Liter) des Mediums entspricht. Hierbei kann sinnvollerweise eine Bandbreite vorgegeben sein, die beispielsweise 0,1 bis 5 % der zuzugebenden Menge in diesem Arbeitsvorgang entspricht. Entspricht die zugegebene Menge der vorausgesetzten Menge, oder ist sie zumindest innerhalb einer vorgegebenen Bandbreite, ist bevorzugt, dass für den Benutzer keine erkennbare Reaktion der Küchenmaschine erfolgt, vielmehr in üblicher Weise mit der Abarbeitung fortgeschritten wird.

Ist in einem Abarbeitungsvorgang sogleich ein bestimmtes Gesamtgewicht einer Menge an Medium, die zugegeben werden soll, vorgegeben, liegt der genannte Fall vor, dass die Küchenmaschine kein spezifisches Gewicht benötigt. Beispielsweise kann in dem Arbeitsvorgang die Zugabe von 100 g Zucker oder 100 g Mehl vorgesehen sein. In diesem Fall kann sich die Prüfung durch die Küchenmaschine darauf beschränken, ob die Waage 100 g (oder einen Wert innerhalb einer diesbezüglich vorgegebenen Bandbreite) anzeigt beziehungsweise meldet.

Nach einer weiteren Lehre der Erfindung kann auch vorgesehen sein, dass im Falle, dass die erfasste Menge des Mediums einer in einem anderen Abarbeitungsvorgang vorgesehenen Menge eines Mediums entspricht, die erfasste Menge diesem Medium des anderen Abarbeitungsvorganges zugeordnet wird. Dies kann entsprechend auch davon abhängig gemacht werden, ob die erfasste Menge des Mediums sich innerhalb einer vorgegebenen Bandbreite befindet.

Hinsichtlich einer Steuerung der Küchenmaschine kann somit eine Überprüfung erfolgen, ob ein Benutzer beispielsweise die in einem folgenden Abarbeitungsvorgang vorgesehene Menge von beispielsweise 200 g Mehl zugibt, nicht aber die in dem aktuellen Abarbeitungsvorgang vorgesehene Menge von beispielsweise 100 g Zucker. Die Steuerung der Küchenmaschine kann hierzu so ausgebildet sein, dass darauf geschlossen wird, dass der Benutzer versehentlich bereits Mehl zugegeben hat, obwohl er an dieser Stelle Zucker zugeben sollte. Hieraus kann die Steuerung dann weiter eine Änderung in den Abarbeitungsvorgängen derart vornehmen, dass in dem folgenden Abarbeitungsvorgang nicht eine Zugabe von 200 g Mehl sondern in dem genannten Beispiel von 100 g Zucker vorgegeben beziehungsweise erwartet wird. Gegebenenfalls kann auch eine Einwirkung auf das Medium durch beispielsweise Rühren und/oder Heizen entsprechend angepasst werden beziehungsweise anpassbar sein.

Diese Deutung der Zugabe von Medium durch einen Benutzer kann dem Benutzer von der Küchenmaschine angezeigt werden. Beispielsweise durch eine lesbare Mitteilung auf einem Display. Es kann auch beispielsweise eine Sprachmitteilung erfolgen. Weiter kann auch ein Signal erfolgen.

Weiter kann auch eine farbige Darstellung, beispielsweise in Form eines farbigen Symbols erfolgen, wobei die Farbe des Symbols auch für das Maß der Überschreitung der vorgegebenen Menge und/oder einer von der Küchenmaschine in dem beschriebenen Sinne vorgenommenen Umwidmung hinsichtlich der Abarbeitungsvorgänge.

Es kann auch zwischen einem Unterschreiten und einem Überschreiten der vorgegebenen Menge, gegebenenfalls der genannten Bandbreite, unterschieden werden. Diesbezüglich können im gegebenen Fall unterschiedliche Anzeigen oder Meldungen vorgesehen sein.

Bezüglich einer Anpassung einer oder mehrerer weiterer in folgenden Abarbeitungsvorgängen vorgesehener zuzugebender Mengen von Medien, als Reaktion der Küchenmaschine auf eine entsprechende Über- oder Unterschreitung einer vorgegebenen Menge, kann beispielsweise in einem ersten Abarbeitungsvorgang, wenn anstelle von beispielsweise 100 g Zucker tatsächlich 120 g zugegeben wird, die Steuerung der Küchenmaschine so ausgelegt sein, dass eine in einem folgenden Abarbeitungsvorgang vorgesehene Zugabe von beispielsweise Mehl an diese (erhöhte) Menge von beispielsweise Zucker angepasst wird. Auch kann beispielsweise vorgesehen sein, dass die Küchenmaschine als Reaktion dem Benutzer mitteilt, gegebenenfalls auch eine Bestätigung hierfür anfordert, dass für die folgenden Abarbeitungsvorgänge davon ausgegangen wird, und entsprechende Änderungen in den Mengen selbsttätig vorgenommen werden, dass sich die Anzahl der Personen, für welche die Zubereitung erfolgen soll, oder die gesamte Menge des Zubereitungsgutes, auf eine von der Küchenmaschine dann genannte Anzahl oder Gesamtmenge geändert hat.

Bevorzugt wird als Reaktion der Küchenmaschine eine Anpassung einer oder mehrerer in dem Rezept vorgesehener zuzugebender Mengen von Medien vorgenommen. Das Rezept ist insbesondere ausgelegt zur Erstellung eines Zubereitungsgutes mit einer vorgegebenen Anzahl von Portionen, beispielsweise zwei Portionen, oder einer vorgegebenen Menge, beispielsweise ein Kilogramm. Anhand des Waagensignals bei Zugabe eines Mediums im Rahmen eines Abarbeitungsvorganges, oder im Hinblick auf ein eingegebenes Volumen, kann auf die vom Benutzer gewünschte Portionenzahl oder Menge rückgeschlossen werden. Dies geschieht insbesondere durch eine dynamische Überwachung des Waagensignals während der Zugabe eines bestimmten Mediums, das entscheidend ist für das Volumen beziehungsweise die Menge des Zubereitungsgutes nach Abarbeitung des gesamten Rezepts. Die dynamische Überwachung des Waagensignals bedeutet den Vergleich der eingegebenen Menge mit der in dem Abarbeitungsvorgang vorgesehenen Menge und der Berücksichtigung einer abweichenden Menge für einen oder mehrere folgende Abarbeitungsvorgänge. In Abhängigkeit von der erfassten Menge eines solchen die Portionenzahl oder Menge zumindest mitbestimmenden Mediums erfolgt bevorzugt eine Anpassung der im Zuge des Rezeptes weiter zuzugebenden, die Portionenzahl oder Menge mit beeinflussenden Medien.

Auch kann anhand der dynamischen Überwachung des Waagensignals bei in einem Abarbeitungsvorgang geforderter Zugabe eines die Konsistenz der Speise beeinflussenden Mediums, bei entsprechender Abweichung von der vorgesehenen Menge, auf die gewünschte Konsistenz geschlossen werden. Ein die Konsistenz beeinflussendes Medium kann beispielsweise Wasser, Brühe, Milch oder eine andere Flüssigkeit sein. Bevorzugt erfolgt auch in diesem Fall eine Anpassung einer oder mehrerer weiter zuzugebender Mengen von Medien.

Wenn von einem Benutzer eine größere Menge von einem die Konsistenz (Viskosität) beeinflussenden Medium zugegeben wird als vorgesehen, kann von der Küchenmaschine beispielsweise auf eine gewünschte flüssigere oder steifere Konsistenz geschlossen werden. Gegebenenfalls kann auch von der Küchenmaschine dem Benutzer in einem solchen Fall zur Auswahl gestellt werden, welches Ziel im Weiteren verfolgt werden soll. Beispielsweise das Ziel einer geänderten Konsistenz (steifer/flüssiger) und/oder das Ziel einer höheren Anzahl an Portionen/ einer größeren Menge als ursprünglich zur Zubereitung vorgesehen.

Über eine physikalische Viskosität hinaus kann sich die Konsistenz auch auf im Wesentlichen nur optisch oder bei einem Verzehr bemerkbare Varianten, wie beispielsweise sämig oder teigig oder dergleichen beziehen.

Bevorzugt wird während eines Abarbeitungsvorganges, bei welchem die Zugabe eines Mediums gefordert wird, die in dem Abarbeitungsvorgang geforderte Menge an Medium und weiter bevorzugt auch die sich aufgrund entsprechender Anpassung (beispielsweise zufolge Portions- oder Konsistenzänderung) gegenüber der ursprünglich vorgesehenen Menge geänderte Menge angezeigt.

Ein Rezept enthält insbesondere neben den Mengenangaben für zuzugebende Medien in bevorzugter Ausgestaltung Zubereitungsparameter für einen Abarbeitungsvorgang, wie insbesondere Drehzahl des Rührwerks, Temperatur einer auf das Medium beziehungsweise die Medien einwirkenden Heizung und/oder die Zeitspanne einer Rührwerk- und/oder Heizungseinwirkung. So werden in Abarbeitungsvorgängen des Rezeptes beispielsweise eine vorgegebene Drehzahl des Rührwerks insbesondere selbsttätig, weiter bevorzugt zusätzlich auch eine Zeitspanne, über welche das Rührwerk aktiviert ist, eingestellt.

Eine Änderung in einer Abfolge oder Menge von zuzugebendem Medium kann auch alternativ oder ergänzend sich in einer Änderung eines oder mehrerer Zubereitungsparameter auswirken. Eine mögliche Änderung eines oder mehrerer Zubereitungsparameter, insbesondere infolge einer Anpassung als Reaktion der Küchenmaschine auf eine gegenüber den Vorgaben veränderte Menge eines zugegebenen Mediums, wird bevorzugt dem Benutzer vorgeschlagen. Der Benutzer kann im Falle des Vorschlagens den Vorschlag annehmen, wonach die Küchenmaschine entsprechend einer oder mehrerer vorschlagsgemäß geänderten Abarbeitungsvorgängen verfährt.

Das Annehmen durch den Benutzer, auch als Quittieren zu bezeichnen, kann beispielsweise durch eine Betätigung einer hierzu aktivierten Taste oder Berühren eines vorgegebenen aktiven Feldes in einem Touch-Display erfolgen.

In einer bevorzugten Ausgestaltung wird die Zeitspanne der Heizungseinwirkung und/oder die Zeitspanne der Rührwerkdrehung angepasst an die erfasste Menge des zugegebenen Mediums verlängert oder verringert, dies weiter insbesondere bei Zugabe eines Mediums, welches für das Gesamtvolumen des fertigen Rezepts mit ausschlaggebend ist.

Die Küchenmaschine kann auch alternativ eine Anpassung eines oder mehrerer Zubereitungsparameter selbsttätig vornehmen, entsprechend bevorzugt ohne quittierenden Eingriff durch den Benutzer. In diesem Zusammenhang besteht weiter die Möglichkeit, den oder die veränderten Zubereitungsparameter zur Information für den Benutzer anzuzeigen. Darüber hinaus kann der Benutzer in einer Ausgestaltung die selbsttätig vorgenommene Anpassung eines Zubereitungsparameters durch einen Eingriff, beispielsweise eine Tastenbetätigung oder dergleichen, rückgängig machen und hierdurch den Zubereitungsparameter auf den ursprünglichen Wert des zugehörigen Abarbeitungsvorganges zurücksetzen.

Bevorzugt wird in einer Ausbildung die in einem ersten Arbeitsvorgang zugegebene Menge des Mediums bei Übereinstimmung, gegebenenfalls innerhalb einer vorgegebenen Bandbreite, mit einer in einem anderen, zweiten Abarbeitungsvorgang vorgesehenen Menge dem Medium des anderen Abarbeitungsvorganges zugeordnet. Dies ermöglicht, dass bevorzugt allein anhand einer Auswertung des Waagensignals erkannt wird, welches Medium beziehungsweise welche Zutat des abzuarbeitenden Rezepts durch den Benutzer hinzugefügt wurde. Insbesondere bei einem Rezept beziehungsweise einem Abarbeitungsvorgang, bei welchem sich die einzelnen zuzugebenden Medien signifikant in ihrer Menge beziehungsweise in ihrer Masse unterscheiden, kann durch die vorgeschlagene Lösung hinsichtlich einer eindeutigen Erfassung des zugegebenen Mediums durch die Küchenmaschine die Reihenfolge der Zugabe der einzelnen Medien beliebig sein. Durch eine Analyse der zugegebenen Menge eines Mediums kann allein durch einen Vergleich mit der in dem Abarbeitungsvorgang beziehungsweise einem Rezept hinterlegten Mengen aller zuzugebenden Medien festgestellt werden, um welches zugegebene Medium es sich handelt. Wird beispielsweise innerhalb eines Rezeptes im Zuge eines Abarbeitungsvorganges die Zugabe von beispielsweise 100g Wasser gefordert und in einem weiteren (in dem Rezept gegebenenfalls späteren) Abarbeitungsvorgang die Zugabe von beispielsweise 200g Milch, so wird bei einer Zugabe von 200g eines Mediums zufolge einer Analyse der weiteren Abarbeitungsvorgänge und der diesen zugeordneten Mengen das entsprechende Medium - hier Milch - als zugegebenes Medium erfasst.

Ein signifikanter Unterschied zwischen Mengen kann insbesondere gegeben sein, wenn die Mengen sich hinsichtlich ihres Gewichts oder Volumen um 5% oder mehr, bis hin zu dem doppelten oder 3-Fachen oder mehr, unterscheiden.

Insbesondere bei unterschiedlichen Medien innerhalb eines Rezeptes, die zudem hinsichtlich der Menge beziehungsweise des Gewichts stark differenziert sind, kann auch unabhängig von der Reihenfolge der Zugabe allein aufgrund des relativen Gewichtsverhältnisses auf die Natur des Mediums durch Auswertung geschlossen werden.

Bevorzugt wird in einer Weiterführung die Zuordnung der erfassten Menge des Mediums zu einer (erst) in einem anderen Abarbeitungsvorgang vorgegebenen Menge in einem Anzeigefeld der Küchenmaschine angezeigt oder dem Benutzer in sonstiger Weise (beispielsweise akustisch) mitgeteilt. Der Benutzer wird über das anhand der erfassten Menge im Abgleich mit den weiteren Medienzugaben innerhalb des Rezeptes und gegebenenfalls einem anderen Abarbeitungsvorgang zugeordnete Medium informiert. Bevorzugt ist eine Bestätigung der Anzeige durch den Benutzer erforderlich, woraufhin der nächste Abarbeitungsvorgang innerhalb des Rezeptes (erst) ausgelöst wird.

Eine Küchenmaschine, wie sie im vorliegenden Zusammenhang benutzt wird oder gegenständlich angegeben ist, kann insbesondere folgende Komponenten und Einwirkungsmöglichkeiten aufweisen. Es kann ein Zubereitungsgefäß, insbesondere Gargefäß, vorgesehen sein. Das Zubereitungsgefäß kann zum Garen bevorzugt im unteren Bereich aufheizbar sein. Die Aufheizung kann durch verschiedene Einwirkungen, beispielsweise induktiv oder durch Wärmeleitung, vorgesehen sein. Das Zubereitungsgefäß kann mit einem Deckel versehen sein. Der Deckel kann insbesondere zur Verriegelung mit dem Zubereitungsgefäß vorgesehen sein. Hierbei kann weiter vorgesehen sein, dass eine Bearbeitung, jedenfalls im Sinne von starker Aufheizung oder starkem Rühren, nicht vorgenommen werden kann, wenn der Deckel nicht verriegelt ist.

Auf dem Deckel kann ein weiteres Zubereitungsgefäß aufsetzbar sein oder dieses zugleich mit Ausformungen versehen sein, die entsprechend einem Deckel eine Befestigung auf dem Gefäß unmittelbar ermöglichen. In diesem Zubereitungsgefäß kann Zubereitungsgut durch in dem ersten Gefäß entwickelten Dampf zu garen sein. Hierzu kann die Entwicklung von Dampf, etwa durch Betätigung des Rührwerkes, beeinflusst werden.

Das Rührwerk kann mit verschiedenen Umdrehungszahlen betrieben werden. Beispielsweise ausgehend von nur einer oder zwei Umdrehungen pro Minute bis hin zu mehreren 100, gegebenenfalls bis hin zu 1.000 U/min oder höher.

Es kann auch eine sogenannte Turbofunktion vorgesehen sein, bei welcher auf einen Tastendruck zugleich eine sehr hohe Drehzahl, im Bereich von mehreren 100 U/min, beispielsweise 600 bis 1.000 U/min, von der Küchenmaschine erzeugt wird.

Es kann ein Zeitschalter vorgesehen sein. Hierdurch kann die Zeitdauer der Rührwerkseinwirkung und/oder der Heizeinwirkung auf Zubereitungsgut zeitlich gesteuert werden.

Alle diese Einwirkungsmöglichkeiten, insbesondere hinsichtlich einer Heiztemperatur und/oder einer Rührwerksdrehzahl und/oder einer zeitlichen Dauer einer Einwirkung, können in dem hier gegebenen Zusammenhang von der Küchenmaschine abweichend von in einem Rezept oder einzelnen Abarbeitungsvorgängen vorgesehenen Maßnahmen infolge der genannten Erfassung eines Gewichts oder Volumens eines zugegebenen Mediums geändert und angepasst werden.

Die hier vorgesehenen Bandbreiten von beispielsweise 0,5 bis 5% oder 100 bis 200 g oder 100 bis 200 U/min sind jeweils so zu verstehen, dass auch alle Zwischenwerte eingeschlossen sind. Insbesondere in 1/10- oder 1-Schritten der jeweiligen Dimension oder Menge. Also beispielsweise 0,6% bis 5%, 0,5% bis 4,9% oder 101 U/min bis 200 U/min oder 100 U/min bis 199 U/min etc., dies nicht nur zur Änderung der genannten Bandbreiten in dem angesprochenen Sinne, sondern auch zur Offenbarung singulärer Werte, gewonnen durch eine beliebige Anzahl vorstehend genannter Schritte, innerhalb der genannten Bandbreite.

## Patentansprüche

1. Verfahren zum Betrieb einer Küchenmaschine, wobei die Küchenmaschine ein Zubereitungsgefäß, beispielsweise in Form eines Rührgefäßes, aufweist, wobei sich in dem Zubereitungsgefäß ein Einwirkungsmittel wie beispielsweise ein Rührwerk befinden kann, wobei weiter, vorzugsweise schrittweise durch einen Benutzer auslösbar, vorgegebene Abarbeitungsvorgänge von der Küchenmaschine durchgeführt werden und für einen Abarbeitungsvorgang die Zugabe einer hinsichtlich eines Gewichtes oder eines Volumens bestimmten Menge eines Mediums in das Zubereitungsgefäß vorgesehen ist, wobei weiter die Zugabe des Mediums hinsichtlich ihrer Menge erfasst wird und die erfasste Menge mit der für den Abarbeitungsvorgang vorgesehenen Menge, gegebenenfalls auf der Basis eines dem Medium zugeordneten bekannten spezifischen Gewichts, verglichen wird, zur Auslösung einer Reaktion der Küchenmaschine jedenfalls dann, wenn die erfasste Menge, gegebenenfalls bei Über- oder Unterschreiten einer vorgegebenen Bandbreite, von der in dem Abarbeitungsvorgang vorgesehenen Menge abweicht, **dadurch gekennzeichnet, dass** als Reaktion der Küchenmaschine eine Anpassung einer oder mehrerer in einem Rezept vorgesehener, zuzugebender Mengen von Medien vorgenommen wird.

2. Verfahren nach Anspruch 1, **dadurch gekennzeichnet, dass** als Reaktion der Küchenmaschine eine Anzeige in einem Anzeigefeld und/oder ein akustisches Signal vorgenommen wird.

3. Verfahren nach einem der vorhergehenden Ansprüche, **dadurch gekennzeichnet, dass** ein Rezept Zubereitungsparameter für einen Abarbeitungsvorgang wie Drehzahl des Rührwerks, Temperatur einer Heizung und/oder Zeitspanne einer Rührwerk- und/oder Heizungseinwirkung enthält.

4. Verfahren nach Anspruch 3, **dadurch gekennzeichnet, dass** dem Benutzer eine mögliche Änderung eines oder mehrerer Zubereitungsparameter vorgeschlagen wird.

5. Verfahren nach Anspruch 3, **dadurch gekennzeichnet, dass** als Reaktion der Küchenmaschine eine Anpassung eines oder mehrerer Zubereitungsparameter selbsttätig vorgenommen wird.

6. Verfahren nach einem der vorhergehenden Ansprüche, **dadurch gekennzeichnet, dass** die erfasste Menge des Mediums bei Übereinstimmung, gegebenenfalls innerhalb einer vorgegebenen Bandbreite, mit einer in einem anderen Abarbeitungsvorgang vorgesehenen Menge eines Medium diesem Medium des anderen Abarbeitungsvorganges zugeordnet wird.

7. Verfahren nach Anspruch 6, **dadurch gekennzeichnet, dass** die Zuordnung der erfassten Menge des Mediums zu der in einem anderen Abarbeitungsvorgang vorgegebenen Menge eines Mediums eine Anzeige zu einer Unterrichtung des Benutzers oder zu einer Genehmigung durch den Benutzer auslöst.

8. Küchenmaschine mit einem Zubereitungsgefäß, beispielsweise in Form eines Rührgefäßes, wobei sich in dem Zubereitungsgefäß ein Einwirkungsmittel wie beispielsweise ein Rührwerk befinden kann, wobei weiter, vorzugsweise schrittweise durch einen Benutzer auslösbar, vorgegebene Abarbeitungsvorgänge von der Küchenmaschine durchgeführt werden und für einen Abarbeitungsvorgang die Zugabe einer hinsichtlich eines Gewichtes oder eines Volumens bestimmten Menge eines Mediums in das Zubereitungsgefäß vorgesehen sein kann, wobei weiter die Zugabe des Mediums hinsichtlich der Menge erfassbar ist und die erfasste Menge mit der für den Abarbeitungsvorgang vorgesehenen Menge, gegebenenfalls auf das Basis eines dem Medium zugeordneten bekannten spezifischen Gewichts, vergleichbar ist, zur Auslösung einer Reaktion der Küchenmaschine jedenfalls dann, wenn die erfasste Menge, gegebenenfalls bei Über- oder Unterschreiten einer vorgegebenen Bandbreite, von der in dem Abarbeitungsvorgang vorgesehenen Menge abweicht, **dadurch gekennzeichnet, dass** als Reaktion der Küchenmaschine durch die Steuerung der Küchenmaschine eine Anpassung einer oder mehrerer in einem Rezept vorgesehener, zuzugebender Mengen von Medien vornehmbar ist.

9. Küchenmaschine nach Anspruch 8, **dadurch gekennzeichnet, dass** eine Deutung der Zugabe von Medium von der Küchenmaschine anzeigbar ist.

## Claims

1. Method for operating a kitchen appliance, the kitchen appliance comprising a preparation vessel, for example in the form of a mixing vessel, it being possible for an action means such as a mixer to be located in the preparation vessel, predefined processing procedures, which procedures can preferably be triggered stepwise by a user, also being carried out by the kitchen appliance and an amount of a medium that is determined in terms of a weight or a volume being added into the preparation vessel for a processing procedure, the addition of the medium also being detected in terms of the amount thereof and the detected amount being compared with the amount provided for the processing procedure, optionally on the basis of a known specific weight assigned to the medium, in order to trigger a reaction of the kitchen appliance, at least when the detected amount deviates from the amount provided in the processing procedure, optionally when the detected amount falls below or exceeds a predefined range, **characterised in that** one or more amounts of media to be added that are provided in a recipe are adapted as a reaction of the kitchen appliance.

2. Method according to claim 1, **characterised in that** a display is shown in a display field and/or an acoustic signal is produced as a reaction of the kitchen appliance.

3. Method according to either of the preceding claims, **characterised in that** a recipe contains preparation parameters for a processing procedure such as rotational speed of the mixer, temperature of a heating system and/or duration of a mixer and/or heating system action.

4. Method according to claim 3, **characterised in that** a possible change to one or more preparation parameters is proposed to the user.

5. Method according to claim 3, **characterised in that** one or more preparation parameters is/are automatically adapted as a reaction of the kitchen appliance.

6. Method according to any of the preceding claims, **characterised in that**, if the detected amount of the medium matches, optionally within a predefined range, an amount of a medium that is provided in a different processing procedure, said detected amount is assigned to this medium of the different processing procedure.

7. Method according to claim 6, **characterised in that** the assignment of the detected amount of the medium to the amount of a medium predefined in a different processing procedure triggers a display to inform the user or to obtain approval from the user.

8. Kitchen appliance comprising a preparation vessel, for example in the form of a mixing vessel, it being possible for an action means such as a mixer to be located in the preparation vessel, predefined processing procedures, which procedures can preferably be triggered stepwise by a user, also being carried out by the kitchen appliance and it being possible to add an amount of a medium that is determined in terms of a weight or a volume into the preparation vessel for a processing procedure, it also being possible to detect the addition of the medium in terms of the amount thereof and to compare the detected amount with the amount provided for the processing procedure, optionally on the basis of a known specific weight assigned to the medium, in order to trigger a reaction of the kitchen appliance, at least when the detected amount deviates from the amount provided in the processing procedure, optionally when the detected amount falls below or exceeds a predefined range, **characterised in that** one or more amounts of media to be added that are provided in a recipe are adapted by the control system of the kitchen appliance as a reaction of the kitchen appliance.

9. Kitchen appliance according to claim 8, **characterised in that** an explanation of the addition of medium can be displayed by the kitchen appliance.

## Revendications

1. Procédé de fonctionnement d'un appareil de cuisine, dans lequel l'appareil de cuisine comporte un récipient de préparation, par exemple sous la forme d'un récipient de mélange, dans lequel un moyen d'action, tel qu'un agitateur, peut être placé dans le récipient de préparation, dans lequel en outre peuvent être exécutées par l'appareil de cuisine, de préférence par étapes, des opérations de traitement prédéterminées sur déclenchement par un utilisateur, et dans lequel est prévu pour une opération de traitement l'ajout dans le récipient de préparation d'une quantité d'une substance déterminée par rapport au poids ou une masse, dans lequel en outre l'ajout de la substance est détectée en ce qui concerne sa quantité et la quantité détectée est comparée à la quantité prévue pour l'opération de traitement, le cas échéant sur la base d'un poids spécifique connu attribué à la substance, pour déclencher une réaction de l'appareil de cuisine au moins dans le cas où la quantité détectée diffère de la quantité prévue pour l'opération de traitement, le cas échéant si elle est en-deçà ou au-delà d'un intervalle prédéterminé, **caractérisé en ce que** une adaptation d'une ou plusieurs quantités de substances à ajouter qui sont prévues dans une recette, est effectuée en guise de réaction de l'appareil de cuisine.

2. Procédé selon la revendication 1, **caractérisé en ce qu'**est produit un affichage sur un panneau d'affichage et/ou un signal sonore en guise de réaction de l'appareil de cuisine.

3. Procédé selon l'une des revendications précédentes, **caractérisé en ce qu'**une recette contient des paramètres de préparation pour une opération de traitement tels que la vitesse de l'agitateur, la température d'un dispositif de chauffage et/ou la durée d'action d'un agitateur et/ou dispositif de chauffage.

4. Procédé selon la revendication 3, **caractérisé en ce qu'**une modification possible d'un ou plusieurs paramètres de préparation est proposée à l'utilisateur.

5. Procédé selon la revendication 3, **caractérisé en ce qu'**une adaptation d'un ou plusieurs paramètres de préparation est effectuée automatiquement en guise de réaction de l'appareil de cuisine.

6. Procédé selon l'une des revendications précédentes, **caractérisé en ce que** la quantité de substance détectée est attribuée à une substance d'une autre opération de traitement en cas de correspondance avec une quantité prévue, le cas échéant à l'intérieur d'un intervalle prédéfini, de cette substance dans cette autre opération de traitement.

7. Procédé selon la revendication 6, **caractérisé en ce que** l'attribution de la quantité de substance détectée à la quantité prédéfinie d'une substance dans une autre opération de traitement déclenche une indication pour information de l'utilisateur ou pour autorisation par l'utilisateur.

8. Appareil de cuisine comprenant un récipient de préparation, par exemple sous la forme d'un récipient de mélange, dans lequel un moyen d'action tel que par exemple un agitateur peut être placé dans le récipient de préparation, dans lequel en outre sont exécutées par l'appareil de cuisine, de préférence par étapes, des opérations de traitement prédéterminées sur déclenchement par un utilisateur et dans lequel peut être prévu pour une opération de traitement l'ajout dans le récipient de préparation d'une quantité d'une substance déterminée par rapport au poids ou une masse, dans lequel en outre l'ajout de la substance peut être détectée en ce qui concerne sa quantité et la quantité détectée est comparable à la quantité prévue pour l'opération de traitement, le cas échéant sur la base d'un poids spécifique connu attribué à la substance, pour déclencher une réaction de l'appareil de cuisine au moins dans le cas où la quantité détectée diffère de la quantité prévue pour l'opération de traitement, le cas échéant si elle est en-deçà ou au-delà d'un intervalle prédéterminé, **caractérisé en ce qu'**une adaptation d'une ou plusieurs quantités de substances à ajouter qui sont prévues dans une recette, peut être effectuée par le dispositif de commande de l'appareil de cuisine en guise de réaction de l'appareil de cuisine.

9. Appareil de cuisine selon la revendication 8, **caractérisé en ce que** l'appareil de cuisine peut afficher une interprétation de l'ajout de substance.
